# EUROPEAN PATENT APPLICATION

(11) **EP 4 467 214 A2**
(43) Date of publication of application: **27.11.2024**
(21) Application number: 24176239.2
(22) Date of filing: 16.05.2024
(51) Int. Cl.: A63F 13/24, A63F 13/285, A63F 13/98

(54) **SYSTEM AND METHOD FOR AN INTERACTIVE CONTROLLER**

(30) Priority: 24.05.2023 US 202363468627 P
(71) Applicant: Modke LLC, Raleigh, NC 27603 (US)
(72) Inventor: Graham, William Peirce, Raleigh, NC 27603 (US)
(74) Representative: Stevens Hewlett & Perkins

(57) **Abstract**

A system and method for a personal computer gaming joystick designed for use with a full-size keyboard whereby the joystick rests in a cavity created by reducing the space bar, addressing the increasing complexity and key-bind demands of contemporary first-person shooter games, whereby the inventive joystick arm may be equipped with two ball joints whereby one is positioned beneath the joystick's PCB and another at the arm's base enables customization of the joystick's length, height, and angle, ensuring optimal comfort and in-game character control for users with varying hand sizes.

## Description

### CROSS RELATED APPLICATIONS

This applications claims priority to United States Provisional Patent Application No. 63/468,627 filed May 24, 2023.

### FIELD OF THE DISCLOSURE

This disclosure relates generally to the field of interactive video game controllers and more particularly a controller connectable to a keyboard that is designed to allow a person to fully grasp and manipulate the controller to control a character in three dimensional space while freeing up the other keys on the keyboard.

### BACKGROUND

The video game industry has been rapidly growing over the past few years. Video games such as personal computer games have also become more advanced as well and require multiple controls to fully navigate the virtual world the games take place in. Multiple controls are also important for being fully immersed in the virtual world. With numerous controls needed for video games, conventional configurations have proved to be inadequate. Configurations such as these often require one hand to control spatial movement of a video game character with the keyboard while another hand is positioned on a computer mouse to control the vision or camera movement with respect to the video game character.

The general consensus among PC (and especially console) enthusiasts is that using W, A, S, and D keys to move is suboptimal for several reasons. First it does not provide true 360-degree movement whereby a character can only move four directions (forward, backward, left and right). Using W, A, S, and D keys also requires four key binds so the user is forced to use other harder-to-reach keys for important in-game actions (switching weapons, crouching, sliding or jumping, using special abilities, building in Fortnite, etc.) Finally, most kids start playing games on a controller with a joystick (XBOX, PS, Nintendo, etc.) and then must relearn W, A, S, and D key character movement when they switch to PC gaming as they get older.

There are several PC gaming joysticks on the market that address the challenges above and these have gained some popularity in recent years, but the implementation and ergonomics of these products are very poor. These joysticks require the users to manipulate their hands or other body parts into awkward and uncomfortable positions to control the joystick or the user inadvertently moves the joystick. Thus, there exists the need for a joystick arm that provides the adjustability for ergonomics along with custom keycaps to help to position the joystick in the right place.

### SUMMARY

The present invention in some embodiments is directed to a personal computer gaming joystick designed for use with a full-size keyboard whereby the space bar may be removed with a smaller button to accommodate the joystick for perfect placement, addressing the increasing complexity and key-bind demands of contemporary first-person shooter games. The inventive joystick arm may be equipped with two ball joints whereby one is positioned beneath the j oystick's PCB and another at the arm's base enables customization of the j oystick's length, height, and angle, ensuring optimal comfort and in-game character control for users with varying hand sizes. This design also frees up the W, A, S, and D default movement key-binds for other crucial in-game actions. By addressing the long-standing ergonomic challenges associated with integrating a joystick and a full keyboard, the customizable joystick arm offers users unparalleled in-game character control, allowing for 360-degree movement and simultaneous execution of complex in-game mechanics that have been previously unachievable.

The present invention is also directed to an attachment mechanism for the gaming joystick that leverages the keyboard's own switches. This inventive mechanism replaces the ALT keys or other keys with custom keycaps, which connect to a dovetail rail system integrated beneath the keyboard. This innovative design empowers users to position the joystick at their desired location and securely lock it in place, enhancing gameplay and versatility. The combination of these two features constitutes a significant advancement in PC gaming input solutions, meeting the evolving needs of both gamers and game developers.

The preceding and following embodiments and descriptions are for illustrative purposes only and are not intended to limit the scope of this disclosure. Other aspects and advantages of this disclosure will become apparent from the following detailed description.

### BRIEF DESCRIPTION OF THE DRAWINGS

Embodiments of the present disclosure are described in detail below with reference to the following drawings. These and other features, aspects, and advantages of the present disclosure will become better understood with regard to the following description, appended claims, and accompanying drawings. The drawings described herein are for illustrative purposes only of selected embodiments and not all possible implementations and are not intended to limit the scope of the present disclosure.
FIG. 1 is an illustration of the interactive video game controller.
FIG. 2 is an illustration of a perspective view of the interior of the video game controller.
FIG. 3 is also an illustration of a perspective view of the interior of the video game controller.
FIG. 4 is a block diagram of the video game controller.
FIG. 5 is an illustration of the video game controller connected to a keyboard.
FIG. 6 is another illustration of the video game controller connected to a keyboard.
FIG. 7 is an illustration of the paddle key.
FIG. 8 is an illustration of the dovetail connector.

### DETAILED DESCRIPTION

In the Summary above and in this Detailed Description, and the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention, and in the invention generally.

The present description includes one or more embodiments for an interactive video game controller connected to a keyboard that is designed to be customizable and provide optimal ergonomics to fit any hand shape so that the thumb may maintain a comfortable, natural and consistent position on top the joystick at all times just like a console controller.

Interactive video game controller 100 may have a power system designed to provide energy to the circuits and components of interactive video game controller 100 during the process of operating interactive video game controller 100. Interactive video game controller 100 may be powered by methods known by those of ordinary skill in the art. In some embodiments, interactive video game controller 100 may plug into an electrical outlet or USB outlet on a computer using an electrical cord to supply power to the circuits and components of interactive video game controller 100. Further, the power system may include a rechargeable battery pack whereby the rechargeable battery is of a charge, design, and capacity, to provide sufficient power to the circuits and components of interactive video game controller 100 during operation for a set period of time needed to interact with one or more video games. In further embodiments, interactive video game controller 100 may be wirelessly charged or powered.

In some non-limiting embodiments, interactive video game controller 100 may have one or more battery compartments for receiving and holding batteries such as, but not limited to, AA or AAA sized conventional batteries. The battery compartment may include one or more electrodes (e.g., conventional electrodes) that are configured to contact electrically conductive surfaces of the battery received inside the compartment. The battery compartments are selectively accessible by removal of a latch cover whereby the battery compartments and the batteries are accessible only when the user removes a removable battery cover or latch mechanism concealing the battery compartment from external view.

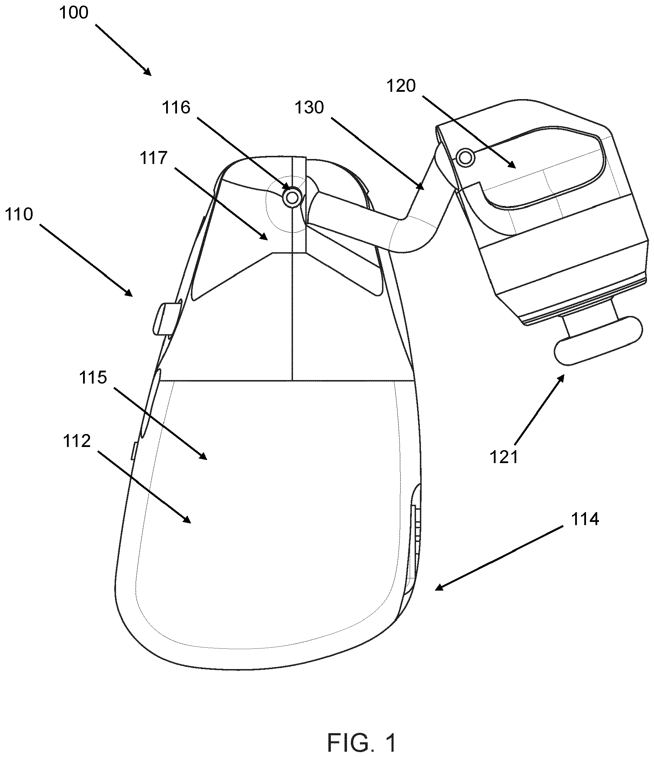

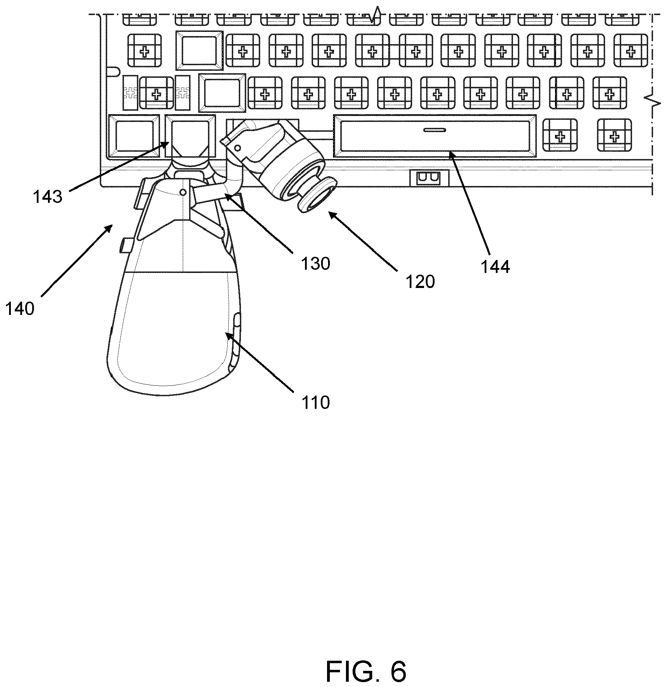

Turning to FIG. 1, FIG. 1 is a perspective view of an interactive video game controller 100 according to an embodiment of the present invention. Interactive video game controller 100 may be used by the user using their left hand or right hand and is controllable from the back whereby the user's hand is angled upwards with their fingers extending over the controller allowing the user to interact with the keyboard. Though the figures illustrate an in interactive video game controller designed for a left hand it may be envisioned that a mirror image of the controller may be used for users who would use their right hand. Interactive video game controller 100 may have four main components, as illustrated in FIG. 6, including a base 110, a joystick mechanism 120, a connector arm 130, and an attachment system 140 used for connecting to a keyboard.

Joystick mechanism 120, connector arm 130, and attachment system 140 may be made of a plastic, such as injection-molded polycarbonate (PC)/acrylonitrile butadiene styrene (ABS) or polyamide (nylon), metal, or other materials typically used in the manufacturing of video game controllers that do not stray away from the intent of the current invention. The material of interactive video game controller 100 may exhibit heat resistance, mechanical strength, or rigidity for continuous playing of interactive games without degradation or deformation of the controller.

Base 110 may be made of rubber or another suitable substance and include a flat bottom surface 114 that acts as a base for interactive video game controller 100 and comes into contact with the surface that the controller is placed upon. Base 110 may have a top surface 112 with a convex or curved lower portion 115 (positioned closest to the user during use) acting as a palm rest that conforms to the natural curvature of the user's hand and wrist, thereby reducing the pressure on the wrist and forearm muscles. Base 110 may include a cushioned surface that provides additional support and comfort to the user whereby the cushioned surface may be made of a soft and flexible material that is designed to absorb shock and reduce vibrations. Base 110 may include a receiving cavity 116 positioned forward of curved lower portion 115 whereby receiving cavity 116 extends upward from a concave upper portion 117. Receiving cavity 116 may be elongated and tubular in shape with an opening positioned at or near a center of base 110 whereby the opening extends outward to a side of base 110.

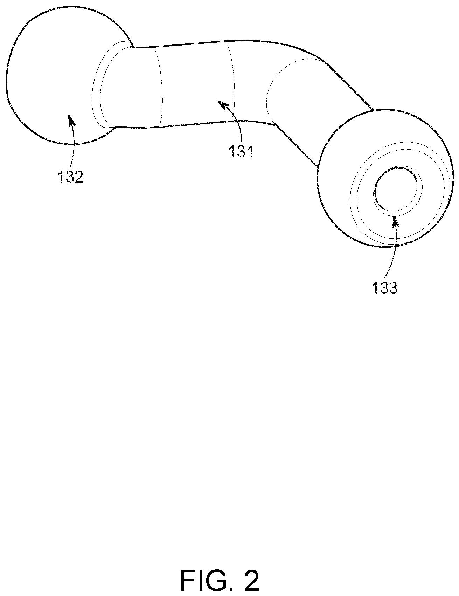

Receiving cavity 116 may be connected to connector arm 130 by a first ball and socket mechanism as shown in Figs. 2-3. In one embodiment, connector arm 130 may include a joint arm 131 that is made up of two portions connected to one another forming an obtuse angle giving joint arm 131 a slightly bent appearance. The first portion of joint arm 131 may be connected to a first ball 132 and the second portion of joint arm 131 may be connected to a second ball 133 positioned at an opposite side of the bend from first ball 132. First ball 132 and receiving cavity 116 may act as a ball and socket mechanism allowing connector arm 130 to be positioned at different angles and configurations thereby adjusting the length and other dimensions of interactive video game controller 100 to accommodate for the varying angles of connector arm 130.

A second ball and socket mechanism may be positioned between second ball 133 and joystick mechanism 120 as shown in FIG. 2. Joystick mechanism 120 may include joystick housing 122. Second ball 133 and joystick housing 122 may act as the ball and socket mechanism allowing joystick 121 of joystick mechanism 120 to be positioned at different angles and configurations to accommodate for the varying angles of joystick 121.

In further detail, first ball 132 and second ball 133 may have engaging end surfaces. Receiving cavity 116 and joystick housing 122 may have an end segment that is substantially or completely hollowed out. The surface of the receiving cavity is tailored to fit the engaging end surface. In some non-limiting embodiments, a bulge may protrude from a surface of the receiving cavity to stop the movement of the engaging end surface, thus preventing over angulation or separation in the connection. The receiving cavity wall thickness and/or the engaging end surface wall thickness are built whereby an interference fit is present after the ball and socket joint connection is linked. It should be appreciated that the ball and socket mechanism may include any number of shapes, hollow areas, and sizes in various configurations and is not limited to those described above. The two ball joint mechanisms mimic the thumb itself and allow the user to achieve full adjustability along X, Y, and Z dimensions similar to how a person's thumb anatomy has two points to achieve flexion, extension, abduction, and circumduction.

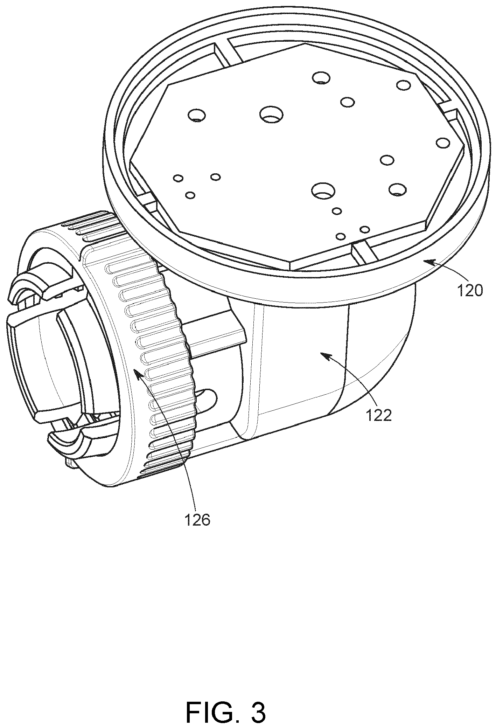

Another embodiment of joystick housing 122, as illustrated and further detailed in FIG. 3, may be hollow and shaped as a right angle extending backward to the user when in use. Joystick housing 122 may act as a housing device for a joystick PCB as well as any circuitry and components which will be discussed later in the specification. The PCB may include a substrate and conductive traces. The substrate may be made of a suitable material such as FR-4, polyimide, or ceramic. The conductive traces are formed on the substrate and may be made of copper or other conductive material. In this embodiment, joystick housing 122 may have a locking mechanism 126 for the ball and socket mechanism that may be used to fix the position of joystick housing 122 in a particular orientation, preventing it from moving or rotating freely in a first position and allowing movement in a second position. This may be accomplished by clamping mechanism, a wedge mechanism, or a threaded mechanism.

Joystick mechanism 120 may have a joystick 121 with a shaft, base, and handle whereby joystick 121 is positioned at the end of joystick mechanism 120 and extends outward from joystick housing 122 such that joystick 121 is at angle with respect to base 110. Joystick 121 may be an input device used to control the movement of a cursor or object in a video game. During use, joystick 121 can be moved in various directions and has a base that provides stability to the shaft. Joystick 121 may be replaceable with other thumb sticks to accommodate different sized thumbs and users or any other directional control housing or component capable of moving a character or a camera in two dimensional or three dimensional space.

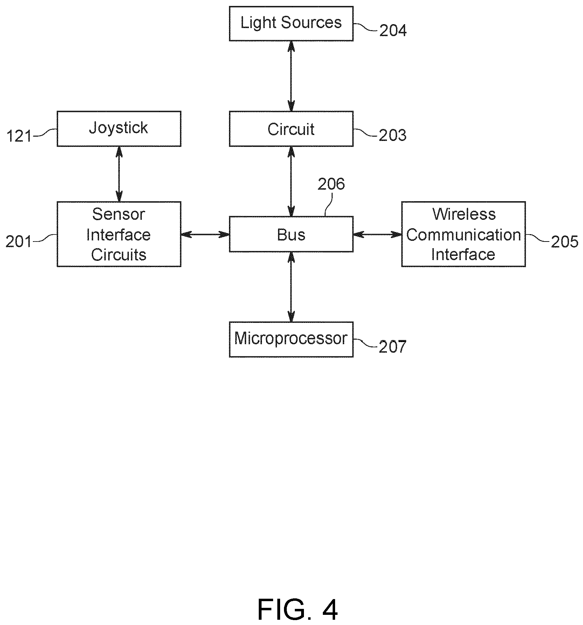

FIG. 4 is an example schematic block diagram of interactive video game controller 100, in accordance with an embodiment. Interactive video game controller 100 include joystick 121, one or more sensor interface circuits 201, a circuit 203, a wireless communication interface 205, a bus 206, and a microprocessor 207. The sensor interface circuit 201 may be a digital, analog, or mixed-signal circuit to receive sensor signals in the form of voltage or current from joystick 121, when they are interacted with by a user. Sensor interface circuit 201 may have one or more electrical sensors or switches that detect the position of joystick 121 in relation to the base. These sensors or switches are connected to a circuit board that processes the signals and sends them to the computer or system being controlled. Depending on the design, the sensors or switches may be arranged in different ways, such as in a cross or a circular pattern, to detect movement in different directions. Joystick 121 generates sensor signals responsive to being pressed by the finger or thumb of the user. In some embodiments, the controls may be connected to a transducer that converts the mechanical motion of the controls into the sensor signals.

Interactive video game controller 100 may include circuit 203 to provide electrical signals, such as voltage. Circuit 203 may be powered by the power system of interactive video game controller 100 to generate the electrical signals. Interactive video game controller 100 may include wireless communication interface 205, which may be a digital, analog, or mixed-signal circuit to transmit wireless signals indicating user input received from the user's hand. The wireless signals may be transmitted to another device such as a video game console, a computer, a wearable device, tablet, mobile computing device head-mounted display, a computer, a virtual reality system, etc. Wireless communication interface 205 may send and receive data via a wireless network without the need for connecting cables to interactive video game controller 100.

Wireless communication interface 205, sensor interface circuits 201, and circuit 203 may communicate via bus 206. Bus 206 may communicate with microprocessor 207 which compares data with the instructions in the game software for specific input from joystick 121 and triggers the appropriate response. In one or more non-limiting embodiments, interactive video game controller 100 may have one or more vibration motors (e.g., rumble motors, eccentric rotating mass vibration motors, etc.) that can be selectively actuated by a signal communicated to interactive video game controller from a separate device such as a video game console to provide vibration feedback to parts of interactive video game controller 100. In further embodiments interactive video game controller 100 may have one or more buttons 119 on base 110, connector arm 130, or joystick mechanism 120 that may be designated to work as an existing key or command on the keyboard.

During operation when joystick 121 is moved, sensor interface circuits 201 detect the change in position and send a corresponding signal to microprocessor 207. Microprocessor 207 then translates the signal into a command. For example, if the joystick is being used to control the movement of a character in a video game, moving the stick forward may correspond to the character moving forward, while moving the stick to the left or right may correspond to turning the character in those directions. The custom design of interactive video game controller 100 provides an infinite number of ergonomic positions for the joystick because of the connector arm design which has 2 ball joints. The ball joints allow the system to get the correct position, height, and angle of the joystick controller for every hand size.

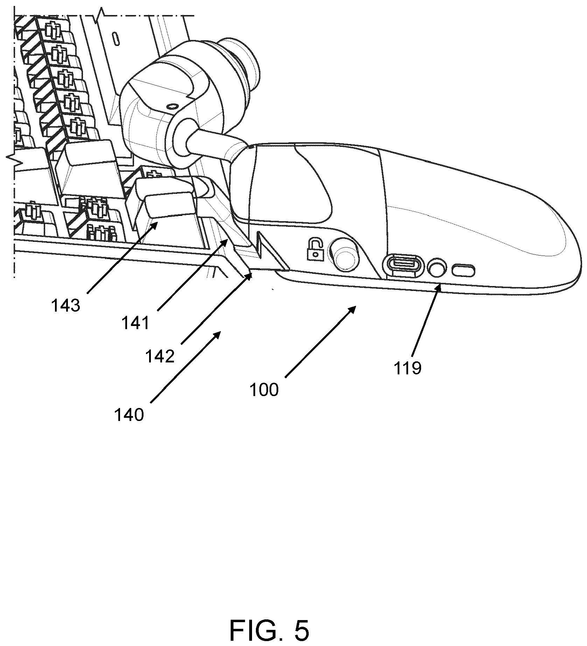

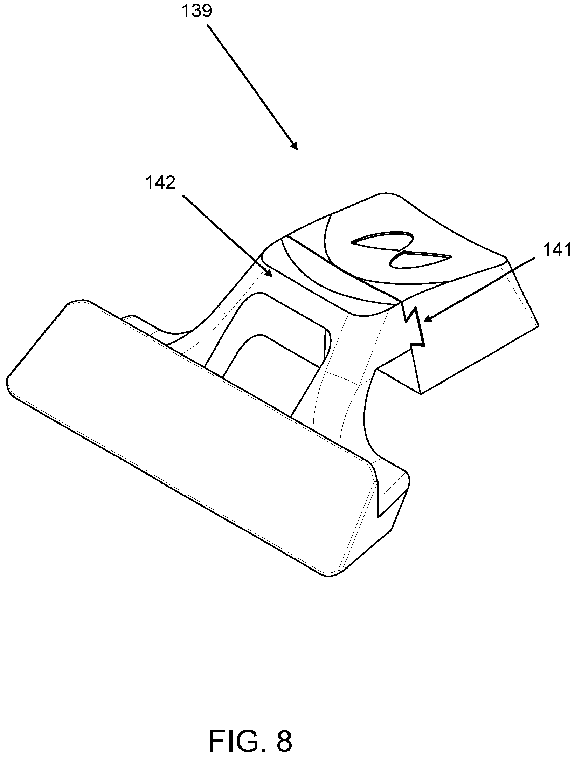

In some non-limiting embodiments, interactive video game controller 100 may be connected to the keyboard by attachment system 140 as illustrated in FIG. 5 and 6. Interactive video game controller 100 may have a dovetail sliding mechanism 139, as illustrated in FIG. 8 with a male connector 141 and a female connector 142, whereby male connector 141 has a protruding end with a series of grooves or teeth and the female connector 142 has a complementary shape with an opening that allows the male connector 141 to be inserted and locked into place. The female connector 142 may be positioned on interactive video game controller 100 while the male connector 141 may be positioned on the keyboard. However, this is non-limiting and the opposite may be true. The male connector may be connected to the keyboard itself via custom keys 143 whereby the keys of the keyboard will be replaced with the custom keys which have attachment devices that extend downward from the keys and connect to the male connector.

The male connector 141 acts as intermediary between the keycap 143 and interactive video game controller 100 and provides a custom fitting regardless of keyboard so the ball joint of connector arm 130 may be in the same position relative to the Windows/ALT key regardless of how thick the keyboard's base is. In one preferred embodiment this may be the ALT keys whereby the male connector 141 will extend along a length of the space bar however any suitable key may be used. In further non-limiting embodiments, base 110 may slide up next to the base of the keyboard whereby the friction of the rubber in base 110 maintains its position with respect to the keyboard. No additional accessories would be needed for this configuration.

In further embodiments, the space bar 144 of the keyboard shown in FIG. 6 may be shortened in half or other fraction whereby connector arm 130 may be positioned and secured by one or more removable fasteners into the gap created by the area that no longer has the space bar positioned next to the partial space bar.

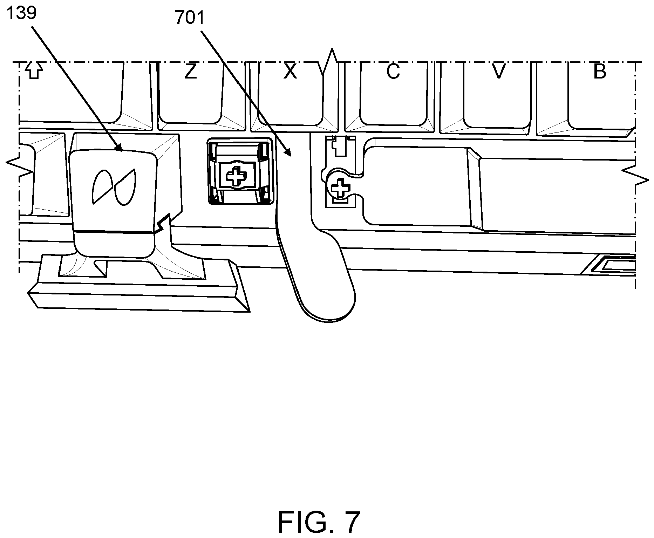

In other non-limiting embodiments, one or more keys may be replaced with one or more paddle shaped keys as illustrated in FIG. 7. Paddle shaped keys 701 may have an upper portion that is square and shaped like a typical key as well as a lower portion that extends down from the upper portion in the form of an elongated paddle such that the user may be able to click the key over a wider range of area.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description but is not intended to be exhaustive or limited to the invention in the form disclosed. Many modifications and variations will be apparent to those of ordinary skill in the art without departing from the scope and spirit of the invention. The embodiments were chosen and described in order to best explain the principles of the invention and the practical application, and to enable others of ordinary skill in the art to understand the invention for various embodiments with various modifications as are suited to the particular use contemplated. The present invention according to one or more embodiments described in the present description may be practiced with modification and alteration within the spirit and scope of the appended claims. Thus, the description is to be regarded as illustrative instead of restrictive of the present invention.

## Claims

1. A controller system for interacting with an interactive application: comprising a controller having a connector arm with a first ball and socket mechanism connected to a base and a second ball and socket mechanism connected to a joystick housing with a joystick extending from the joystick housing.

2. The controller system of claim 1, wherein the base has a convex or curved lower portion acting as a palm rest for a user.

3. The controller system of claim 2, wherein the base has a receiving cavity upward of the convex or curved lower portion for connecting to the connector arm.

4. The controller system of claim 1, wherein the controller has one or more vibrating motors and/or the controller has one or more buttons on the base.

5. The controller system of claim 1, wherein the connector arm has a locking mechanism to fix a position of the connector arm.

6. The controller system of claim 1, wherein the controller has an attachment mechanism and preferably the attachment mechanism is connectable to a keyboard.

7. The controller system of claim 6, wherein the attachment mechanism is detachable from the base of the controller and/or the attachment mechanism is removably connected to the base by a dovetail sliding mechanism.

8. The controller system of claim 6 or 7, wherein the attachment mechanism includes a key cap to replace a key on the keyboard and preferably the key is on a bottom row of the keyboard.

9. The controller system of claim 8, wherein a space bar of the keyboard is removed and a half space bar is inserted and preferably the joystick housing is secured by one or more fasteners in a gap created from the removal of the space bar.

10. The controller system of claim 1, further comprising one or more paddle shaped keys.

11. The controller system of claim 1, wherein the connector arm has a first portion that extends downward and outward diagonally and a second portion that extends upward and outward diagonally.

12. A controller system for interacting with an interactive application comprising: a controller having a connector arm, a directional control housing, and a base; and
an attachment mechanism for removably attaching to a keyboard.

13. The controller system of claim 12, wherein the attachment mechanism is removably detachable from the base of the controller.

14. The controller system of claim 13, wherein the attachment mechanism is removably connected to the base by a dovetail sliding mechanism and has a keycap for replacing an existing key on the keyboard.

15. The controller system of claim 14, wherein the directional control housing is secured by one or more fasteners in a gap created from removal of a space bar with a partial space bar.
